# EUROPEAN PATENT APPLICATION

(11) **EP 2 887 140 A2**
(43) Date of publication of application: **24.06.2015**
(21) Application number: 14197623.3
(22) Date of filing: 12.12.2014
(51) Int. Cl.: G03B 21/20, G03B 33/08

(54) **Light source unit and projection apparatus**

(30) Priority: 20.12.2013 JP 2013263185; 08.09.2014 JP 2014181956
(71) Applicant: CASIO COMPUTER CO., LTD., Shibuya-ku, Tokyo 151-8543 (JP)
(72) Inventor: Fukano, Kazuyasu, Hamura-shi, Tokyo 205-8555 (JP)
(74) Representative: Grünecker Patent- und Rechtsanwälte PartG mbB

(57) **Abstract**

Described is a light source unit which emits fluorescence light to a display element which displays an image by using the fluorescence light including an excitation light source which emits excitation light, a collecting unit (111) which collects the excitation light emitted from the excitation light source and a fluorescent plate (101) which converts the excitation light collected by the collecting unit (111) into the fluorescence light, and a position of the fluorescent plate (101) is shifted from a position where the fluorescence light is the brightest by a predetermined distance along a light axis direction of the collecting unit (111).

## Description

### BACKGROUND OF THE INVENTION

### 1. Field of the Invention

The present invention relates to a light source unit and a projection apparatus.

### 2. Description of Related Art

There is known a projection apparatus including a light source unit constituted of an excitation light emission device which emits blue excitation light, a fluorescent plate which includes a fluorescent layer (fluorescent light emission region) and which converts the blue light into green light when the blue light is emitted toward the fluorescent layer from the excitation light emission device, a red light source device which emits red light, a blue light source device which emits blue light and a display element such as a DMD, for example, which projects an image on a screen by reflecting the green light, red light and blue light (for example, see JP 2011-095388).

However, there may be a case where the fluorescent layer of the fluorescent plate is applied uneven. If the blue light is emitted toward such fluorescent layer of the fluorescent plate, there is a possibility that the unevenness causes a change in intensity of the green light resulting in brightness unevenness in the projected image.

### SUMMARY OF THE INVENTION

In view of the above problems, an object of the present invention is to provide stability in a projected image by controlling the brightness unevenness in the projected image even if the florescent layer is applied unevenly on the fluorescent plate.

In order to solve the above problems, according to one aspect of the invention, there is provided a light source unit which emits fluorescence light to a display element which displays an image by using the fluorescence light including an excitation light source which emits excitation light, a collecting unit which collects the excitation light emitted from the excitation light source and a fluorescent plate which converts the excitation light collected by the collecting unit into the fluorescence light, and a position of the fluorescent plate is shifted from a position where the fluorescence light is the brightest by a predetermined distance along a light axis direction of the collecting unit.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is an outer schematic view of a projection apparatus provided with a light source unit of the embodiment;
FIG. 2 is a functional circuit block diagram of the projection apparatus provided with the light source unit of the embodiment;
FIG. 3 is a plan schematic view showing the inner structure of the projection apparatus provided with the light source unit of the embodiment;
FIG. 4A is a schematic front view of a fluorescent wheel according to the embodiment;
FIG. 4B is a cross-sectional view schematically showing a partial cross-section of the fluorescent wheel according to the embodiment;
FIG. 5 is a view for explaining a positional relation between an excitation light irradiation area where irradiated by the excitation light from the excitation light source according to the embodiment and the fluorescent wheel;
FIG. 6 is a view for explaining brightness measurement points in a projection screen;
FIG. 7 is a timing chart indicating emission periods of the excitation light emission device and two types of light source devices according to the embodiment;
FIG. 8A is an example of a timing chart indicating emission periods of the excitation light emission device and light source devices according to the embodiment; and
FIG. 8B is another example of a timing chart indication emission periods of the excitation light emission device and light source devices according to the embodiment.

### DESCRIPTION OF THE PREFERRED EMBODIMENTS

Hereinafter, preferred embodiments for implementing the present invention will be described with reference to the drawings.

The following embodiments include various technically preferred limitations to implement the present invention. However, the scope of the invention is not limited to the following embodiments and examples shown in the drawings.

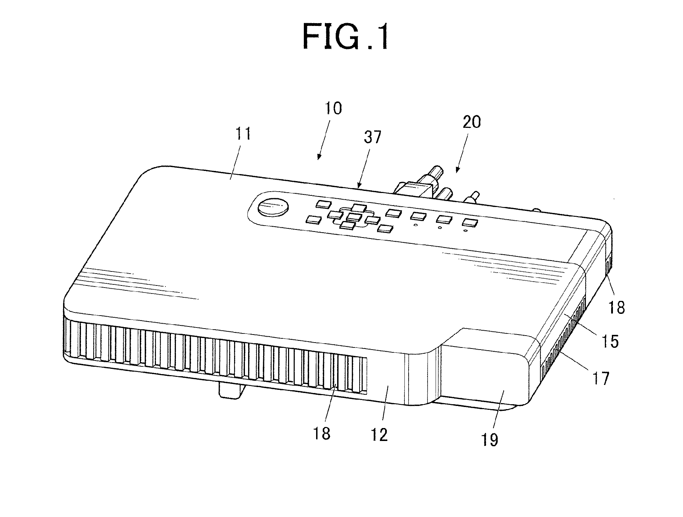

FIG. 1 is an outer schematic view of a projection apparatus 10.

In the embodiment, the left and right of the projection apparatus 10 indicate the left and right directions with respect to the projecting direction, and the front and back of the projection apparatus 10 indicate the front and back directions with respect to the screen direction and the traveling direction of the bundle of rays of the projection apparatus 10.

As shown in FIG. 1, the projection apparatus 10 is in an approximately rectangular shape.

The projection apparatus 10 includes a lens cover 19 on one side of the front panel 12 which is the front side plate of the projector case, the lens cover 19 covers the projection opening. The projection apparatus 10 further includes a plurality of intake holes 18 in the front panel 12.

The projection apparatus 10 further includes an Ir receiving unit (not shown in the drawing) which receives a control signal from a remote controller.

On the upper panel 11 of the case, a key/indicator unit 37 is provided.

In the key/indicator unit 37, keys such as a power switch key, a projection switch key for switching the projection on and off and a switching key for switching projection mode and indicators such as a power indicator for informing on or off of the power and an overheat indicator for informing overheating of the light source unit, the display element and the control unit are arranged.

On the back panel which is the back of the case, an input and output connector unit provided with a USB terminal, a D-SUB terminal for inputting image signals, an S terminal, a RCA terminal, etc. and various terminals 20 such as a power adapter plug and the like are provided.

On the back panel, a plurality of intake holes 18 are formed. Further, on the right panel which is the side plate of the case that is not shown and the left panel 15 which is the side panel shown in FIG. 1, a plurality of outlet holes 17 are formed.

The intake holes 18 are also formed at the corner of the left panel 15 near the back panel. Further, in the lower panel which is not shown in the drawing, a plurality of intake holes and outlet holes are formed near the front, back, left and right panels.

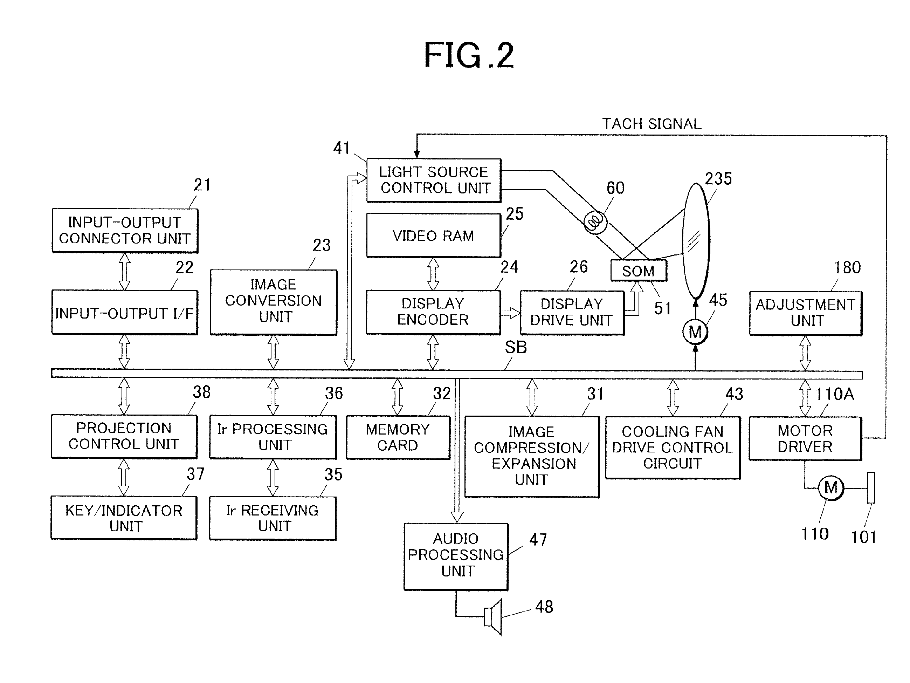

Next, the control unit of the projection apparatus 10 will be described with reference to the block diagram of FIG. 2.

The control unit includes a projection control unit 38, an input-outputs interface 22, an image conversion unit 23, a display encoder 24 , a display drive unit 26 , etc. Image signals of various standards which are input from the input-output connector unit 21 go through the input-output interface 22 and the system bus (SB), and they are converted in the image conversion unit 23 so as to be unified to image signals of a predetermined format suited for display. Thereafter, the image signals are output to the display encoder 24. The frequency of an input image signal may be used as it is in display or may be converted appropriately to prevent tearing. The frequency of an image signal at the time of display is referred to as a display frequency.

The display encoder 24 opens and stores an input image signal in the video RAM 25, generates a video signal from the content stored in the video RAM 25 and outputs the generated video signal to the display drive unit 26.

The display drive unit 26 functions as a display element control unit.

In particular, on the basis of the control of the projection control unit 38, the display drive unit 26 drives the display element 51 which is a spatial light modulator (SOM) at an appropriate frame rate corresponding to the image signal output from the display encoder 24. The display drive unit 26 emits a bundle of rays which is emitted from the light source unit 60 to the display element 51 via a light guiding optical system. In such way, an optical image is formed with reflection light from the display element 51, and a projection display of an image on a screen (not shown in the drawing) via the after-mentioned projection side optical system is performed. Here, the moveable lens group 235 of the projection side optical system is driven by the lens motor 45 to perform zoom adjustment and focus adjustment.

Further, the image compression/expansion unit 31 performs a recording process where brightness signals and color difference signals of image signals are compressed by a process such as ADCT, Huffman coding or the like and sequentially written in a memory card 32 which is detachable recording medium.

Further, the image compression/expansion unit 31 reads out image data recorded in the memory card 32 at the time of replay mode, expands each piece of image data which constitutes a series of video by frame units, outputs the individual image data to the display encoder 24 via the image conversion unit 23 and displays the video and the like on the basis of the image data stored in the memory card 32.

The projection control unit 38 controls operation of individual circuits in the projection apparatus 10. The projection control unit 28 includes a CPU, a ROM in which operation programs such as various settings are fixedly stored, a RAM which is used as a work memory, etc.

Operation signals of the key/indicator unit 37, which includes a main key, indicators, etc., which is provided at the upper panel 11 of the case are directly transmitted to the proj ection control unit 38. Key operating signals from a remote control are received at the Ir receiving unit 35 and code signals which are decoded at the Ir processing unit 36 are output to the projection control unit 38.

The key/indicator unit 37 is the instruction input unit according to the present invention and, based on an instruction by a user, switches between the image quality priority mode which prioritizes image quality and the brightness priority mode which prioritizes brightness. On the basis of an instruction to the key/indicator unit 37, the projection control unit 38 controls the individual units so as to correspond to each mode.

The audio processing unit 47 is connected to the projection control unit 38 via a system bus (SB). The audio processing unit 47 is provided with a sound source circuit such as a PCM sound source or the like, and converts the audio data into analog data at the time of projection mode or replay and performs amplified sound emission by driving the speaker 48.

Further, the projection control unit 38 controls the light source control unit 41, and the light source control unit 41 individually controls light emission of the excitation light emission device, the red light source device and the blue light source device of the light source unit 60 so that the light of a predetermined wavelength band that is requested at the time of image generation is emitted from the light source unit 60.

The light source control unit 41 controls the motor driver 110A via a system bus (SB) and also rotates the wheel motor 110 so as to synchronize (detail will be described later).

The projection control unit 38 makes the cooling fan drive control circuit 43 detect temperature by a plurality of temperature sensors provided at the light source unit 60 and the like and controls the rotation speed of a cooling fan on the basis of the results of the temperature detection.

Further, the projection control unit 38 makes the cooling fan continue to rotate even after the power of the projector main body is turned off by a timer or the like by the cooling fan drive control circuit 43. Alternatively, the projection control unit 38 performs controlling to turn the power of the projector main body off depending on the result of the temperature detection by the temperature sensors.

Furthermore, the projection apparatus 10 is provided with an adjustment unit 180. This will be described later.

Next, the inside structure of the projection apparatus 10 will be described.

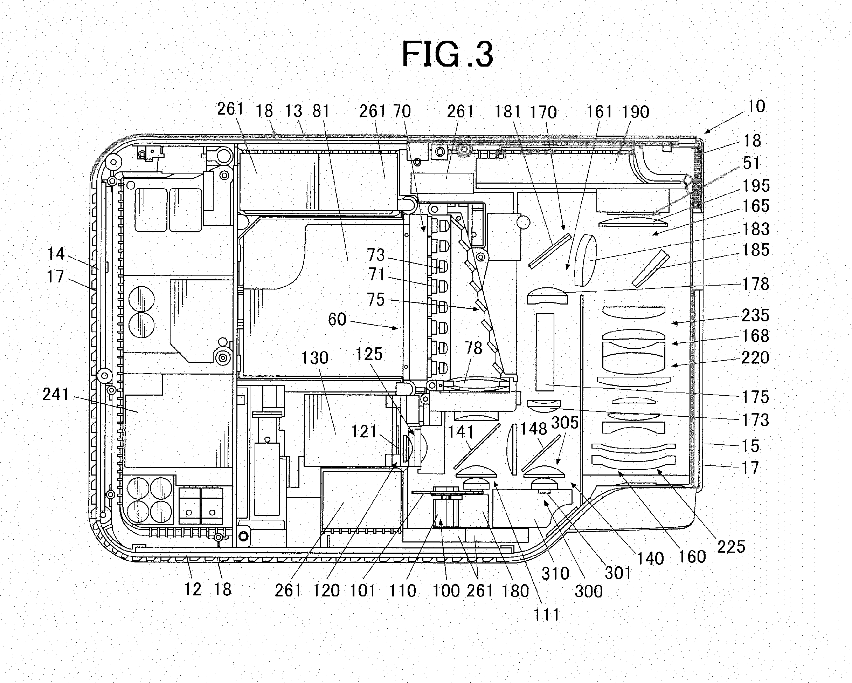

FIG. 3 is a plane schematic view of the inside structure of the projection apparatus 10. As shown in FIG. 3, the projection apparatus 10 includes a control unit base 241 near the right panel 14. The control unit base 241 includes a power source circuit block, a light source control block, etc. The projection apparatus 10 is provided with the light source unit 60 on the side of the control unit base 241, that is, at approximately center part of the projector case. Further, the projection apparatus 10 includes an optical system unit 160 between the light source unit 60 and the left panel 15.

The light source unit 60 includes the excitation light emission device 70, a fluorescence emission device 100, the blue light source device 300, the red light source device 120 and a light source side optical system 140. The excitation light emission device 70 is arranged at approximately center part in the left-right direction of the projector case and near the back panel 13. The fluorescence emission device 100 is arranged on the light axis of the bundle of rays which is emitted from the excitation light emission device 70 and near the front panel 12. The blue light source device 300 is arranged near the front panel 12 so as to be parallel to the bundle of rays which is emitted from the fluorescence emission device 100. The red light source device 120 is arranged between the excitation light emission device 70 and the fluorescence emission device 100. The light source side optical system 140 converts each light axis of the emission light from the fluorescence emission device 100, the emission light from the red light source 120 and the emission light from the blue light source device 300 so as to be the same light axis and collects the color lights at the incident port of the light tunnel 175 which is a predetermined surface.

The excitation light emission apparatus 70 is arranged so that the light axis be parallel with the back panel 13.

The excitation light emission device 70 includes an excitation light source 71, a group of reflection mirrors 75, a collecting lens 78 and a heat sink 81. The excitation light source 71 emits excitation light. The reflection mirrors of the group of reflection mirrors 75 convert the light axes of the emission light from the excitation light source 71 by 90 degrees toward the front panel 12. The excitation light collecting lens 78 collects the emission light from the excitation light sources 71 which reflected off the reflection mirrors of the group of reflection mirrors 75. The heat sink 81 is arranged between the excitation light sources 71 and the right panel 14.

With respect to the excitation light sources 71, a plurality of blue laser diodes are arranged in matrix and collimator lenses 73 which convert the excitation light emitted from the blue laser diodes into parallel light are respectively arranged on the light axes of the blue laser diodes. With respect to the group of reflection mirrors 75, a plurality of reflection mirrors are arranged in a step manner and they reduce the cross section areas of the bundles of rays which are emitted from the excitation light sources 71 in one direction and emits the reduced bundles of rays toward the collecting lens 78.

A cooling fan 261 is arranged between the heat sink 81 and the back panel 13, and the excitation light sources 71 are cooled by the cooling fan 261 and the heat sink 81. Further, a cooling fan 261 is also arranged between the group of reflection mirrors 75 and the back panel 13, and the group of reflection mirrors 75 and the collecting lens 78 are cooled by the cooling fan 261.

The fluorescence emission device 100 includes a fluorescent wheel 101, a wheel motor (drive unit) 110, a collecting lens 111 and an adjustment unit 180.

The fluorescent wheel 101 is arranged so as to be parallel with the front panel 12, that is, to be orthogonal to the light axis of the emission light from the excitation light emission device 70. The wheel motor (drive unit) 110 rotates the fluorescent wheel 101 in the circumferential direction. The collecting lens 111 collects a bundle of rays of the fluorescence light which is emitted from the fluorescent wheel 101 toward the back panel 13.

The adjustment unit 180 moves the fluorescent wheel 101 and the wheel motor 110 along the light axis direction of the emission light from the excitation light emission device 70.

The control unit 41 obtains a rotation frequency of the wheel motor 110, that is, a rotation frequency of the fluorescent wheel 101 on the basis of pulses of number of rotation such as a TACH signal, for example, output from the motor driver 110 which is the drive (control) circuit of the fluorescent wheel 101.

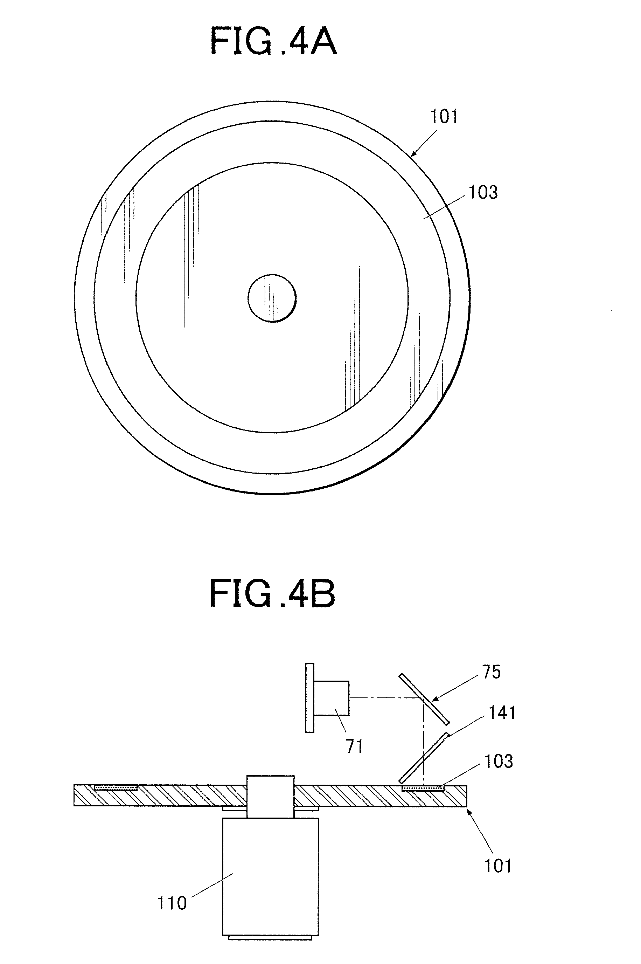

As shown in FIGS. 4A and 4B, the fluorescent wheel 101 is a metallic material in a circular plate shape and functions as a fluorescent plate which performs fluorescence emission upon receiving excitation light. In particular, a ring shaped fluorescence emission region, which converts the excitation light from the excitation light sources 71 into fluorescence light of green wavelength band, is formed as a concave unit in the fluorescent wheel 101. Further, on the surface of the fluorescent wheel 101 including the fluorescence emission region facing the excitation light sources 71, a reflection surface which reflects light is formed by mirror processing such as silver deposition. A green fluorescent layer 103 is laid on the reflection surface.

The emission light from the excitation light emission device 70 which is emitted toward the green fluorescent layer 103 of the fluorescent wheel 101 excites the green fluorescent of the green fluorescent layer 103. The bundle of fluorescence light emitted from the green fluorescent in all directions is emitted toward the excitation light sources 71 directly or toward the excitation light sources 71 after being reflected off the reflection surface of the fluorescent wheel 101.

Further, the excitation light which is emitted on the metallic member without being absorbed by the fluorescent of the fluorescent layer 103 reflects off the reflection surface and enters the fluorescent layer 103 again and excites the fluorescent layer 103. Therefore, by making the surface of the concave unit of the fluorescent wheel 101 be the reflection surface, the usage efficiency of the excitation light emitted from the excitation light sources 71 can be improved and the fluorescent wheel 101 can perform brighter light emission.

Here, the excitation light which is emitted toward the excitation light sources 71 without being absorbed by the fluorescent among the excitation light reflected off the reflection surface of the fluorescent wheel 101 toward the fluorescent layer 103 transmits through the after-mentioned first dichroic mirror 141 and the fluorescence light is reflected off the first dichroic mirror 141. Therefore, the excitation light is not emitted outside. Further, as shown in FIG. 3, a cooling fan 261 is arranged between the wheel motor 110 and the front panel 12, and the fluorescent wheel 101 is cooled by the cooling fan 261.

The fluorescent wheel 101 and the wheel motor 110 are moved by the adjustment unit 180 along the light axis direction of the excitation light source 71 and their distance to the collecting unit 111 are adjusted. By the distance being adjusted, the area of the irradiation area where irradiated by the excitation light emitted from the excitation light source 71 is adjusted.

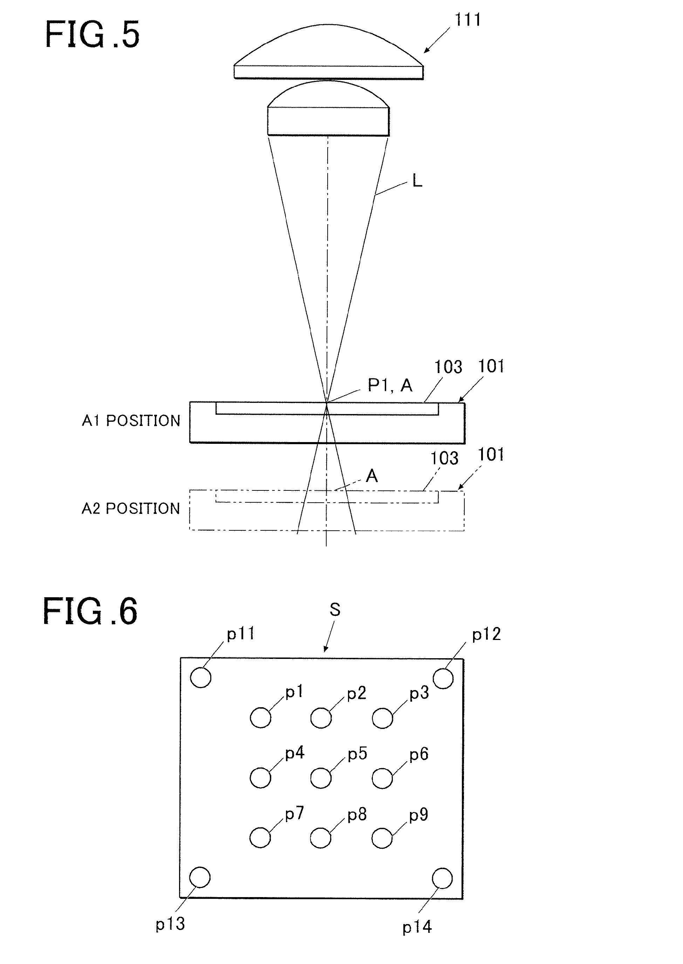

FIG. 5 is a drawing for explaining the positional relation between the irradiation area where irradiated by the excitation light emitted from the excitation light source 71 and the fluorescent wheel 101.

If the fluorescent wheel 101 is at the position A1, the irradiation area A where irradiated by the excitation light is to be the smallest since the surface of the fluorescent layer 103 is at the focus point P1 of the excitation light L. If the fluorescent wheel 101 is distanced from the position A1 so as to be further from the excitation light source 71 (position A2), the irradiation area A is larger than when the fluorescent wheel 101 is at the position A1. The adjustment unit 180 adjusts the area of the irradiation area A by moving the fluorescent wheel 101 and the wheel motor 110 in the light axis direction of the collecting unit 111.

If the area of the irradiation area A is larger than a predetermined area, even if the fluorescence applied on the fluorescent layer 103 is uneven, influence of the unevenness is dispersed across the irradiation area A (evened out). Therefore, unevenness in brightness with respect to the projection image can be controlled.

For example, as for the collecting unit 111, a group of lenses constituted of a planoconvex lens having the effective diameter of 15.0mm, a meniscus lens having the effective diameter of 7.2mm is used, and the distance to the focus position from the group of lenses is set to 0.85mm, this position being the reference position.

If the fluorescent wheel 101 is positioned at the reference position, the fluorescence light which is emitted by the fluorescent wheel 101 is to be the brightest.

At this time, as shown in FIG. 6, brightness is measured with respect to nine points (p1 to p9) in the center area and four points (p11 to p14) at the corners of the projection screen S. First, the average value (1m) of all 13 points, which are the measuring points pi to p9 and the measuring points p11 to p14, is obtained. This average value is set as the average brightness, and in the following table (table 1), relative values are shown where the brightest value being 100%.

Among the measurement results, an average value (1m) of the measuring points pi to p9 is obtained. With respect to the measuring points p11 to p14, the minimum value (1m) thereof is obtained. Then, the minimum value is divided by the average value. This is variation in brightness. By using this, variation in brightness is evaluated.

If there is no variation in brightness, the minimum value/average value=1. Therefore, as the value obtained by dividing the minimum value by the average value is closer to 1, variation in brightness is small in the projection screen S.

Then, by moving the position of the fluorescent wheel 101 from the reference position in units of 0.1mm so as to get away from the collecting unit 111 and so as to approach the collecting unit 111, the average brightness and variation in brightness are evaluated at each position.

The following table shows the evaluation results.

**[Table 1]**

| Position of fluorescent wheel | Average brightness | Variation in brightness | Variation evaluation |
|---|---|---|---|
| -0.3 | 90.9% | 0.517 | × |
| -0.2 | 96.3% | 0.525 | × |
| -0.1 | 99.8% | 0.536 | Δ |
| 0.0 | 100.0% | 0.546 | Δ |
| 0.1 | 97.6% | 0.557 | ⊚ |
| 0.2 | 93.7% | 0.554 | ○ |
| 0.3 | 87.3% | 0.549 | ○ |

When the fluorescent wheel 101 is moved from the reference position so as to approach the collecting unit 111, the value of variation in brightness is lower than the value (0.546) at the reference position. Further, it can be seen that the amount of decrease be greater as the fluorescent wheel 101 be closer and closer to the collecting unit 111.

It is considered that this is because, when the fluorescence light which is reflected by the fluorescent wheel 101 is taken in to the planoconvex lens and the meniscus lens, the fluorescence light is distributed only near the center and therefore, the variation in brightness becomes large.

On the other hand, when the fluorescent wheel 101 is arranged in the direction getting away from the collecting unit 111 with respect to the reference position, it can be seen that at any position, the value of variation in brightness is greater than the value (0.546) at the reference position.

Especially, the value is the greatest when the fluorescent wheel 101 is distanced from the reference position by 0.1mm in the direction getting away from the collecting unit 111. The ratio of this 0.1mm to the distance 8.5 from the collecting unit 111 to the focus position is 0.1/8.5=0.118.

That is, it is preferred that the position of the fluorescent wheel 101 is shifted by 10% or more of the distance from the collection unit 111 to the focus position from the position where the fluorescence light is the brightest (reference position). In such way, even if the fluorescent wheel 101 is shifted so as to be distanced from the collecting unit 111 only by 0.1mm with respect to the reference position, the decreasing level of the average brightness can be controlled to be about 3% with respect to the brightest position (reference position). This can be understood from table 1.

Here, the area of the irradiation area A when the fluorescent wheel 101 is distanced from the reference position in the direction getting away from the collecting unit 111 by 10% is the predetermined area.

If the irradiation area A is smaller than the predetermined area, this means that the excitation light is more collected. Therefore, the brightness increases comparing to when the irradiation area A is larger or equal to the predetermined area.

If the brightness priority mode is input to the key/indicator unit 37, the light source control unit 41 controls the adjustment unit 180 and adjusts the positions of the fluorescent wheel 101 and the wheel motor 110 so that the irradiation area A be smaller than the predetermined area. In particular, the positions of the fluorescent wheel 101 and the wheel motor 110 are adjusted so that the fluorescent wheel 101 be at the reference position (the position where brightness is the brightest 100%, approximately the focus position).

On the other hand, if the image quality priority mode is input to the key/indicator unit 37, the light source control unit 41 controls the adjustment unit 180 and adjusts the positions of the fluorescent wheel 101 and the wheel motor 110 so that the irradiation area A be larger or equal to the predetermined area. In particular, the positions of the fluorescent wheel 101 and the wheel motor 110 are adjusted so that the fluorescent wheel 101 be arranged distanced from the reference position by 0.1mm in the direction getting away from the collecting unit 111.

The red light source device 120 includes a red light source 121 which is disposed so that the light axis therefrom is parallel with the excitation light sources 71 and a group of collecting lenses 125 which collect the emission light from the red light source 121. The red light source device 120 is arranged so that the light axis thereof intersects the emission light from the excitation light emission device 70 and the light of green wavelength band emitted from the fluorescent wheel 101. Further, the red light source 121 is a red light-emitting diode, as a semiconductor light emitting element, which emits light of red wavelength band. The red light source device 120 further includes a heat sink 130 arranged on the right panel 14 side of the red light source 121. A cooling fan 261 is arranged between the heat sink 130 and the front panel 12, and the red light source 121 is cooled by the cooling fan 261.

The blue light source device 300 includes a blue light source 301 which is arranged so as to be parallel with the light axis of the emission light from the fluorescence emission device 100 and the group of collecting lenses 305 which collect the emission light from the blue light source 301. The blue light source device 300 is arranged so that the light axis therefrom intersects the emission light from the red light source device 120. Further, the blue light source 301 is a blue light-emitting diode, as a semiconductor light emitting element, which emits light of blue wavelength band. The blue light source device 300 further includes a heat sink 310 which is arranged on the front panel 12 side of the blue light source 301. A cooling fan 261 is arranged between the heat sink 310 and the front panel 12 and the blue light source 301 is cooled by the cooling fan 261.

The light source side optical system 140 includes a collecting lens which collects the bundles of rays of the red wavelength band, the green wavelength band and the blue wavelength band, a dichromic mirror which converts the light axes of the bundles of rays of individual wavelength bands to have the same light axis, etc.

In particular, at the position where the light axis of the light of red wavelength band which is emitted from the red light source device 102 intersects the light axes of the light of blue wavelength band which is emitted from the excitation light emission device 70 and the light of green wavelength band which is emitted from the fluorescent wheel 101, the first dichroic mirror 141 is arranged. The first dichroic mirror 141 allows the light of blue wavelength band and the light of red wavelength band transmit therethrough and reflects the light of green wavelength band to convert the light axis of the green light by 90 degrees toward the left panel 15 is disposed.

Further, at the position where the light axis of the light of blue wavelength band which is emitted from the blue light source device 300 intersects with the light axis of the light of red wavelength band which is emitted from the red light source device 120, the second dichroic mirror 148 is arranged. The second dichroic mirror 148 allows the light of blue wavelength band transmit therethrough and reflects the light of green wavelength band and the light of red wavelength band to convert the light axes of green light and red light by 90 degrees toward the back panel 13. Between the first dichroic mirror 141 and the second dichroic mirror 148, a collecting lens is disposed.

The optical system unit 160 includes a lighting side block 161, an image generation block 165 and a projection side block 168. The lighting side block 161 is positioned on the left side of the excitation light emission device 70. The image generation block 165 is positioned near where the back panel 13 intersects with the left panel 15. The projection side block 168 is positioned between the light source side optical system 140 and the left panel 15. The optical system unit 160 forms approximately U shape with these three blocks.

The lighting side block 161 includes a part of the light guiding optical system 170 which guides the light which is emitted from the light source unit 60 to the display element 51 in the image generation block 165. The light guiding optical system 170 in the lighting side block 161 includes a light tunnel 175, a collecting lens 173, a collecting lens 178, a light axis conversion mirror 181 and the like. The light tunnel 175 makes the bundle of rays emitted from the light source unit 60 be a light bundle having even intensity distribution. The collecting lens 173 collects the light from the light source at the incident surface of the light tunnel 175. The collecting lens 178 collects the light emitted from the light tunnel 175. The light axis conversion mirror 181 converts the light axis of the bundle of rays emitted from the light tunnel 175 toward the image generating block 165.

The image generation block 165 includes a collecting lens 183 and an emission mirror 185. As the light guiding optical system 170, the collecting lens 183 collects the light from the light source which reflected off the light axis conversion mirror 181 at the display element 51. The emission mirror 185 emits the bundle of rays which transmitted through the collecting lens 183 to the display element 51 at a predetermined angle. The image generation block 165 includes a DMD which is the display element 51, and a heat sink 190 for cooling the display element 51 is arranged between the display element 51 and the back panel 13. The display element 51 is cooled by the heat sink 190. Further, near the front of the display element 51, a collecting lens 195 as the projection side optical system 220 is disposed.

The projection side block 168 includes a group of lenses of the projection side optical system 220 which emit the "on" light which is reflected off the display element 51 to a screen. The projection side optical system 220 includes a group of fixed lenses 225 arranged inside a fixed lens barrel and a group of movable lenses 235 arranged inside a movable lens barrel, and the projection side optical system 220 is a varifocal lens with the zoom function. Zoom adjustment and focus adjustment can be carried out by moving the group of movable lenses 235 by a lens motor.

Next, controlling of the excitation light emission device 70, the red light source device 120 and the blue light source device 300 by the control unit 41 will be described.

The control unit 41 controls flashing of the excitation light emission device 70, the red light source device 120 and the blue light source device 300 individually and in a time-shared manner. In such way, composite light or monochromatic light can be emitted from the light source unit 60. Here, the light source control unit 41 controls the excitation light source 71 and the wheel motor 110 so that the position of the irradiation area A be different in ever rotation of the fluorescent wheel 101.

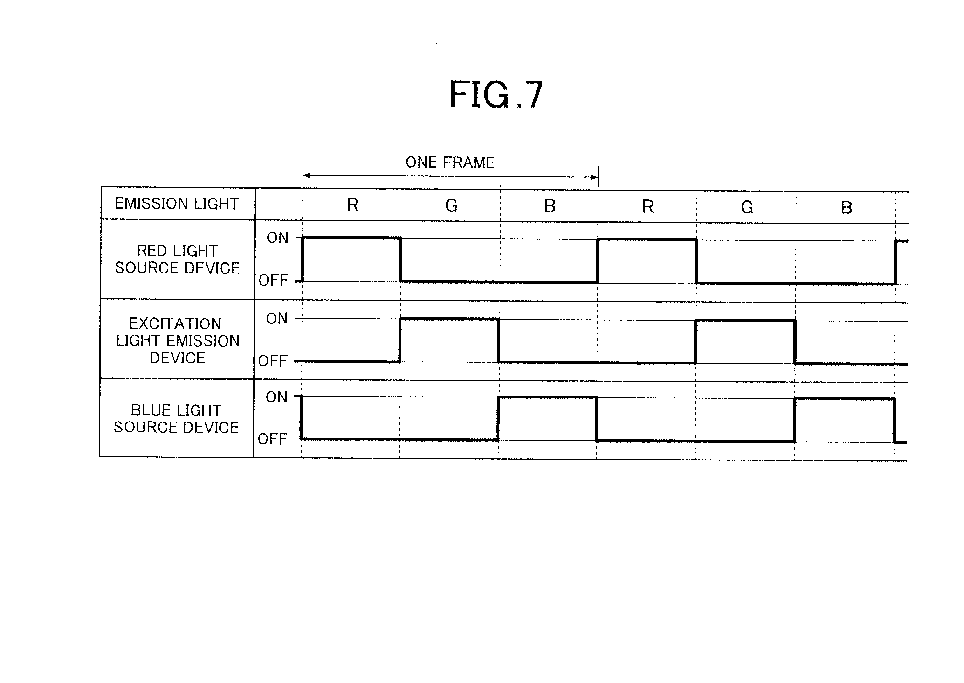

In particular, as shown in FIG. 7, the light source control unit 41 controls so as to light the red light source device 120, the excitation light emission device 70 and the blue light source device 300 individually and sequentially in one frame, only including periods where lights of red wavelength band, green wavelength band and blue wavelength band are emitted individually.

In such way, when only the red light source device 120 is lit, red light enters the light tunnel 175 via the light source side optical system 140. When only the excitation light emission device 70 is lit, excitation light is emitted to the fluorescent wheel 101 of the fluorescence emission device 100 so that the green light emitted from the fluorescent wheel 101 enters the light tunnel 175 via the light source side optical system 140. When only the blue light source device 300 is lit, blue light enters the light tunnel 175 via the light source side optical system 140.

That is, by making the excitation light emission device 70 and the two types of light source devices 120 and 300 emit light individually, the light source unit 60 can emit single color lights (red, green, blue) sequentially.

By the DMD which is the display element 51 of the projection apparatus 10 displaying the lights of individual colors separately in a time-shared manner according to data, a color image is projected on a screen.

Since the light source control unit 41 can individually control light emission of the excitation light emission device 70 and the two types of light source devices 120 and 130, any two or all three of the excitation light emission device 70 and the two types of light source devices 120 and 130 may be controlled so as to be lit at the same time during a predetermined period.

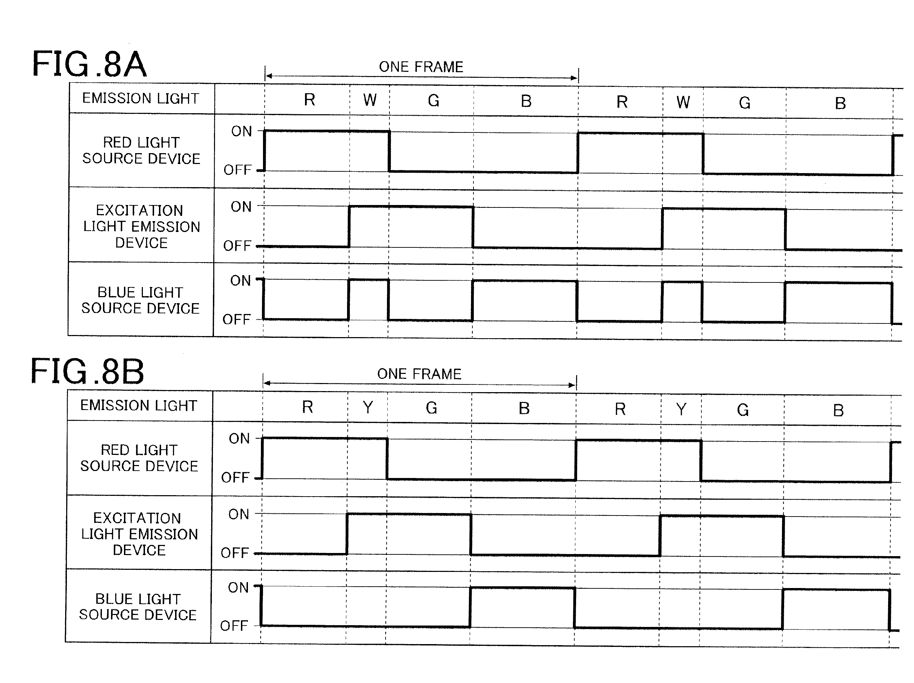

That is, the light source control unit 41 can control to light all of the red light source device 120, the excitation light emission device 70 and the blue light source device 300 so as to include a period where the light of white wavelength band generated by lights of red, green and blue wavelength bands being combined is emitted as shown in FIG. 8A, for example.

Further, the light source control unit 41 may control to light the red light source device 120 and the excitation light emission device 70 at the same time so that the lighting period of the red light source device 120 and the lighting period of the excitation light emission device 70 overlap by starting lighting the excitation light emission device 70 while the red light source device 120 is lit, as shown in FIG. 8B, for example.

The combination of the red light source device 120 and the excitation light emission device 70 is not the only combination to be lit at the same time, and combinations that allows emission of cyan (Cy) and magenta (Mg) may also be applied.

It is needless to say, that according to the change in lighting control of the light source devices as shown in FIGS. 7, 8A and 8B, the display control in the display drive unit 26 is also changed so as to match.

In such way, the light source unit 60 generates and emits, not only single lights of red, green and blue, but also white wavelength band light which is composite light. That is, the light source unit 60 can subsequently emit the light of red wavelength band, the light of white wavelength band, the light of green wavelength band and the light of blue wavelength band. Moreover, the light source unit 60 can generate and emit the light of yellow wavelength band which is a composite of red and green lights. That is, the light source unit 60 can also sequentially emit the light of red wavelength band, the light of green wavelength band and the light of blue wavelength band. Therefore, a color image of high brightness can be generated on a screen by the DMD which is the display elements 51 of the projection apparatus 10 by displaying the lights of individual colors in a time-shared manner according to data.

In the driving as shown in FIGS. 7, 8A and 8B, if the image quality priority mode is instructed, it is preferred that color purity is high without performing simultaneous lighting as in FIG. 7. Further, if the brightness priority mode is instructed, bright driving where simultaneous lighting is performed is preferred as shown in FIGS. 8A and 8B.

When a user operates the key/indicator unit 37 to instruct the brightness priority mode before image projection or during image projection, the light source control unit 41 controls the adjustment unit 180 to adjust the position of the fluorescent wheel 101 and the position of the wheel motor 110 so that the fluorescent wheel 101 be arranged at the reference position. In such way, the irradiation area A be smaller than the predetermined area.

When the brightness priority mode is instructed, in addition to the adjustment of the position of the fluorescent wheel 101, a driving where simultaneous lighting is performed as in FIGS. 8A and 8B is selected.

On the other hand, when a user operates the key/indicator unit 37 to instruct the image quality priority mode before image projection or during image projection, the light source control unit 41 controls the adjustment unit 180 and adjusts the position of the fluorescent wheel 101 and the position of the wheel motor 110 so that the fluorescent wheel 101 be distanced from the reference position by 0.1mm in the direction getting away from the collecting unit 111. In such way, the irradiation area A be larger than the predetermined area.

If the image quality priority mode is instructed, in addition to the adjustment of the position of the fluorescent wheel 101 so as to be distanced from the collecting unit 111, a driving where simultaneous lighting is not performed as shown in FIG. 7 is selected.

As described above, according to the embodiment, when the brightness priority mode is instructed, the position of the fluorescent wheel 101 is adjusted so that the irradiation area A be smaller than the predetermined area and further, a driving where simultaneous lighting as shown in FIGS. 8A and 8B is performed is selected. Therefore, the brightness priority display which is even brighter can be carried out.

On the other hand, in the image quality priority mode, the area of the irradiation area A may be equal to or greater than the predetermined area since the position of the fluorescent wheel 101 is shifted only by a predetermined distance from the reference position in the direction of the light axis of the collecting unit 111. If the area of the irradiation area is greater or equal to the predetermined area, even if fluorescence applied to the fluorescent wheel 101 is uneven, influence thereof is dispersed (averaged) in the irradiation area A and brightness unevenness in a projected image can be controlled.

Moreover, since the position of the fluorescent wheel 101 is shifted from the reference position in the direction getting away from the collecting unit 111, brightness unevenness can be controlled more surely comparing to when the fluorescent wheel 101 is shifted in the direction approaching the collecting unit 111.

Since the fluorescence light reflected off the fluorescent wheel 101 is collected by the collecting unit 111, brightness unevenness can also be controlled with respect to the reflecting type fluorescent wheel 101.

Further, since the fluorescent wheel 101 rotates in its circumferential direction, brightness unevenness can also be controlled with respect to the rotation type fluorescent wheel 101.

Furthermore, brightness unevenness can also be conrolled in asynchronous operation where the position of the irradiation area A differs in every rotation of the fluorescent wheel 101.

In such way, in the image quality priority mode, high quality image display where brightness unevenness is prevented can be performed.

If the image quality priority mode is instructed, in addition to the position adjustment so as to distance the fluorescent wheel 101 from the collecting unit 111, a driving where simultaneous lighting is not performed as shown in FIG. 7 is selected. Therefore, display where image quality (color reproductivity) is prioritized than brightness can be carried out.

Here, driving is not limited to the driving where simultaneous lighting is not performed as shown in FIG. 7, and driving with a short simultaneous lighting period may be selected.

Since the position of the fluorescent wheel 101 is adjusted by the brightness priority mode or the image quality priority mode, as the adjustment instruction, being input to the key/indicator unit 37, display can be performed by selecting whether to prioritize brightness or to control brightness unevenness at a user's timing.

The present invention is not limited to the above described embodiment, and can be freely modified within the scope of the invention.

In the above embodiment, the description is given by taking a single panel type projection apparatus which lights the excitation light source 71 in a time-sharing manner as an example. However, since the way of excitation light emission is also limited with respect to a three panel type (multi panel type) projection apparatus, which is provided with three display elements, the configuration according to the present invention can be applied preferably.

Further, the light source control unit 41 may be provided separately in the light source unit 60 and not in the projection apparatus 10.

Furthermore, layout of the optical systems is not limited to what is described above, and may be of various configurations.

In the above embodiment, a dichroic mirror is used for converting a light axis direction and for selecting transmission or reflection according to a wavelength. However, this is not limitative in any way, and the dichroic mirror can be replaced by other means such as a dichroic prism, for example.

Moreover, in the above embodiment, the light source unit 60 is constituted of the excitation light emission device 70 and the red light source device 120 and the blue light source device 300 as two types of light source devices. However, this is not limitative in any way. For example, configuration may be such that a light source device which emits light of a complementary color wavelength band such as yellow or cyan may be added.

The excitation light source 71 of the excitation light emission device 70 is not limited to a device which emits light of blue wavelength band. For example, a laser diode which emits excitation light of the ultraviolet region may be used as the excitation light source 71.

The light source unit 60 may also be applied to a rear projection display apparatus.

In the embodiment, the fluorescent wheel 101 which rotates is exemplified as the fluorescent plate of the present invention. However, a fluorescent plate which does not rotate may also be used as the fluorescent plate of the invention.

In the embodiment, a case where the light source control unit 41 controls the excitation light source 71 and the wheel motor 110 so that the position of the irradiation area A be different in every rotation of the fluorescent wheel 101 is described. However, the light source control unit 41 may control so that the position of the irradiation area A be the same for every rotation of the fluorescent wheel 101.

In the embodiment, a case where the distance between the fluorescent wheel 101 and the collecting unit 111 is dynamically adjusted is described. However, configuration may be such that the position of the fluorescent wheel 101 is fixed at the position where the fluorescent wheel 101 is shifted by a predetermined distance along the light axis direction of the collecting unit 111 from the position where the fluorescent light is the brightest.

The adjustment mechanism of the adjustment unit 180 of the embodiment may be realized by a lead screw mechanism or may be realized by a piezoelectric element, for example.

Moreover, in the embodiment, a case where the position of the fluorescent wheel 101 is adjusted is explained. However, configuration may be such that the position of the fluorescent wheel 101 is fixed and the position of the collecting unit 111 (the entire or a part of lenses that constitute the collecting unit 111) is adjusted in the light axis direction. In such case, the collecting unit 111 is moved by the above described adjustment mechanism.

Further, by adapting a configuration where the focal lengths of all of or a part of the lenses that constitute the collecting unit 111 is changed, the relative positional relation between the collecting unit 111 and the fluorescent wheel 101 may be adjusted freely.

This can be realized by using a liquid lens, for example.

Moreover, in the embodiment, a case where the relative positional relation between the fluorescent wheel 101 and the collecting unit 111 is adjusted by the fluorescent wheel 101 being moved in the light axis direction is described. However, the relative position between the fluorescent wheel 101 and the collecting unit 111 can be adjusted also by moving the fluorescent wheel 101 in the diameter direction if the thickness of the fluorescent wheel 101 is varied in a step manner, the plurality of steps being concentric circles.

Here, on the surface of the excitation light source 71 of each step of the fluorescent wheel 101, a reflection surface and a green fluorescent layer which is laid on the reflection surface are provided, and in each step, the green fluorescent is excited by the emission light from the excitation light emission device 70.

Moreover, in the embodiment, a configuration where the projection control unit 38 and the light source control unit 41 are provided separately is described. However, it is needless to say that the both functions may be controlled by one control unit.

Although number of embodiments of the invention are described above, the scope of the present invention is not limited to the above described embodiments. The scope of the present invention includes the invention described in the claims and the equivalents thereof.

## Claims

1. A light source unit (60) which emits fluorescence light to a display element (51) which displays an image by using the fluorescence light, comprising:
an excitation light source (71) which emits excitation light;
a collecting unit (111) which collects the excitation light emitted from the excitation light source (71); and
a fluorescent plate (101) which converts the excitation light collected by the collecting unit (111) into the fluorescence light,
wherein
a position of the fluorescent plate (101) is shifted from a position where the fluorescence light is the brightest by a predetermined distance along a light axis direction of the collecting unit (111).

2. The light source unit (60) according to claim 1, wherein
the position of the fluorescent plate (101) is shifted from the position where the fluorescence light is the brightest in a direction getting away from the collecting unit (111).

3. The light source unit (60) according to claim 1 or 2, wherein
the collecting unit (111) collects the fluorescence light reflected off the fluorescent plate (101).

4. The light source unit (60) according to any one of claims 1 to 3, further comprising:
a drive unit (110) which rotates the fluorescent plate (101) in a circumferential direction; and
a light source control unit (41) which controls the excitation light source (71) and the drive unit (110).

5. The light source unit (60) according to claim 4, wherein
the light source control unit (41) controls the drive unit (110) so that an irradiation area, where irradiated by the excitation light emitted from the excitation light source (71) to the fluorescent plate (101), be different in every rotation.

6. The light source unit (60) according to any one of claims 1 to 5, further comprising:
an instruction input unit (37) in which a user inputs an adjustment instruction regarding a position of the fluorescent plate (101); and
an adjustment unit (180) which adjusts a relative positional relation between the fluorescent plate (101) and the collecting unit (111) when the adjustment instruction is input in the instruction input unit (37).

7. The light source unit (60) according to claim 6, further comprising other light sources (120, 300) each of which emits light of different wavelength band than the fluorescence light,
wherein
when the instruction input unit (37) receives the adjustment instruction, the light source unit (60) changes light emission timings of the excitation light source (71) and the other light sources (120, 300).

8. The light source unit (60) according to claim 7, wherein when an adjustment instruction to shift the position of the fluorescent plate (101) from the position where the fluorescence light is the brightest by the predetermined distance along the light axis direction of the collecting unit (111) is input to the instruction input unit (37), the light source unit (60) changes the light emission timings of the excitation light source (71) and the other light sources (120, 300) so that a period of simultaneous light emission is not included or the period of simultaneous light emission be short.

9. The light source unit (60) according to any one of claims 1 to 8, wherein the position of the fluorescent plate (101) is shifted from the position where the fluorescence light is the brightest by 10% or more of a distance to a focal position from the collecting unit (111).

10. A projection apparatus, comprising:
the light source unit (60) according to any one of claims 1 to 9;
the display element (51);
a light guiding optical system (170) which guides light from the light source unit (60) to the display element (51);
a projection side optical system (220) which projects an image which is emitted from the display element (51) on a screen; and
a projection control unit (38) which controls the light source unit (60) and the display element (51).
